# EUROPEAN PATENT APPLICATION

(11) **EP 4 803 459 A1**
(43) Date of publication of application: **09.09.2026**
(21) Application number: 26160601.6
(22) Date of filing: 25.02.2026
(51) Int. Cl.: B65G 54/02, G05D 1/00

(54) **METHOD FOR MANAGING A FLEET OF TRANSPORT UNITS OF AN AUTOMATION SYSTEM AND AUTOMATION SYSTEM CONFIGURED TO CARRY OUT SAID METHOD**

(30) Priority: 07.03.2025 IT 202500004767
(71) Applicant: Mech I Tronic S.r.l., 15121 Alessandria (IT)
(72) Inventor: Choplin, Grégory, 15121 Alessandria (IT)
(74) Representative: Perani & Partners S.p.A.

(57) **Abstract**

Method for managing a fleet of transport units (1) of an automation system 100, wherein:
- the automation system (100), in addition to the fleet of transport units (1), comprises a movement plane (2) and at least one automation station (3), the latter being configured to sequentially receive at an entrance a plurality of workpieces to be processed (P1) and to deliver at an exit a plurality of processed workpieces (P2),
- the transport units 1 are independently movable on the movement plane (2) in a controlled manner to and from an entrance (31) and an exit (32) of the automation station (3).

The method comprises the steps of:
a) bringing a first group of transport units (1a) loaded with a first group of workpieces to be processed (P1_{G1}), in succession:
al) to the entrance (31) of the automation station (3) to feed the first group of workpieces to be processed (P1_{G1}), and then
a2) to a parking region (20) of the movement plane (2)

b) downstream of a1), bringing a second group of transport units (1b) loaded with a second group of workpieces to be processed (P1_{G2}), in succession:
b1) to the entrance (31) of the automation station (3) to feed the second group of workpieces to be processed (P1_{G2}), and then
b2) to the exit (32) of the automation station (3) to pick up respective processed workpieces (P2) obtained from the first group of workpieces to be processed (P1_{G1}), c) downstream of a2), bringing in succession the first group of transport units (1a) from the parking region (20) to the exit (32) to sequentially pick up respective processed workpieces (P2) obtained from the second group of workpieces to be processed (P1_{G2}).

## Description

### Technical Field

The present invention relates to a method for managing a fleet of transport units which finds useful application in the industrial automation sector.

### State of the Art

In the industrial automation sector, there has always been a need to optimize the flow of components between one or more automation stations to increase the efficiency of production plants.

To this end, movement systems have been developed comprising a fleet of transport units that are independently movable on a movement plane.

In use, the transport units move in sequence first to the entrance (inlet) of an automation station, where they deliver respective workpieces to be processed, and then to the exit (outlet), where they pick up the processed products obtained.

The space between the entrance and the exit of the automation station is limited. Therefore, at the start of the production process, it is not possible to accumulate in a line all the transport units which, after having delivered respective workpieces to be processed, are waiting to pick them up once processed. This problem becomes more significant as the cycle time of the automation station increases.

To overcome this problem, it has been considered to have the transport units that first deliver the workpieces to be processed to the automation station, continue empty beyond the exit of the latter. By doing so, the transport units that first deliver the workpieces to be processed do not accumulate between the entrance and the exit of the automation station. The processed workpieces obtained from the processing of the workpieces delivered by these first transport units are then collected by subsequent transport units.

However, this solution is not without drawbacks.

The movement of empty transport units, in addition to being energy inefficient, significantly complicates the flows of the transporters, reducing the flexibility of the plant and making any reorganization or updating operations of the production process difficult.

The movement of empty transport units also complicates the tracking of the flows of individual workpieces to be processed or already processed.

### Object of the Invention

In this context, the technical task underlying the present invention is to propose a method for managing a fleet of transport units of an automation system (plant) that overcomes the drawbacks of the prior art mentioned above.

In particular, an object of the present invention is to provide an efficient method for managing a fleet of transport units.

A further object of the present invention is to provide a method for managing a fleet of transport units that is flexible, i.e., easily adaptable to different configurations of the production system (plant) and to any reconfigurations or updates thereof.

It is also an object of the present invention to provide a method for managing a fleet of transport units capable of allowing accurate tracking of the individual workpieces to be processed or processed within the production system (plant).

### SUMMARY OF THE INVENTION

In accordance with the present invention, the indicated technical task and the specified objects are achieved by a method for managing a fleet of transport units of an automation system (plant) in accordance with one or more of the claims reported below.

In particular, the present invention proposes to provide a parking region on the movement plane and to organize the fleet of transport units into a first and a second group, sequentially brought to the entrance of the automation station.

In use, the transport units of the first group, after delivering the respective workpieces to be processed to the entrance of the automation station, move to the parking region.

The transport units of the second group, after also having delivered respective workpieces to be processed, move instead to the exit of the automation station to collect the processed workpieces obtained from the processing of the workpieces delivered by the transport units of the first group.

The transport units of the first group that are in the parking region are then used to collect the processed workpieces obtained from the processing of the workpieces delivered by at least part of the transport units of the second group.

Unlike the methods described above, this management method does not require the continuous movement of empty transport units and, therefore, has greater efficiency and facilitates the traceability of the flows of the individual workpieces.

It is also worth noting that the method object of the present invention is characterized by high flexibility. By appropriately sizing the parking region and the number of units of the first group, it is in fact easily possible to adapt the method object of the present invention to different configurations of automation plants, as well as to any reconfigurations or updates thereof.

### LIST OF FIGURES

Further characteristics and advantages of the present invention will become clearer from the indicative, and therefore non-limiting, description of a preferred but not exclusive embodiment of a method for managing a fleet of transport units in an automation system and of an automation system configured to carry out said method, as illustrated in the accompanying drawings, wherein:
- Figure 1 shows a block diagram representing the steps of a method for managing a fleet of transport units of an automation system according to an embodiment of the present invention,

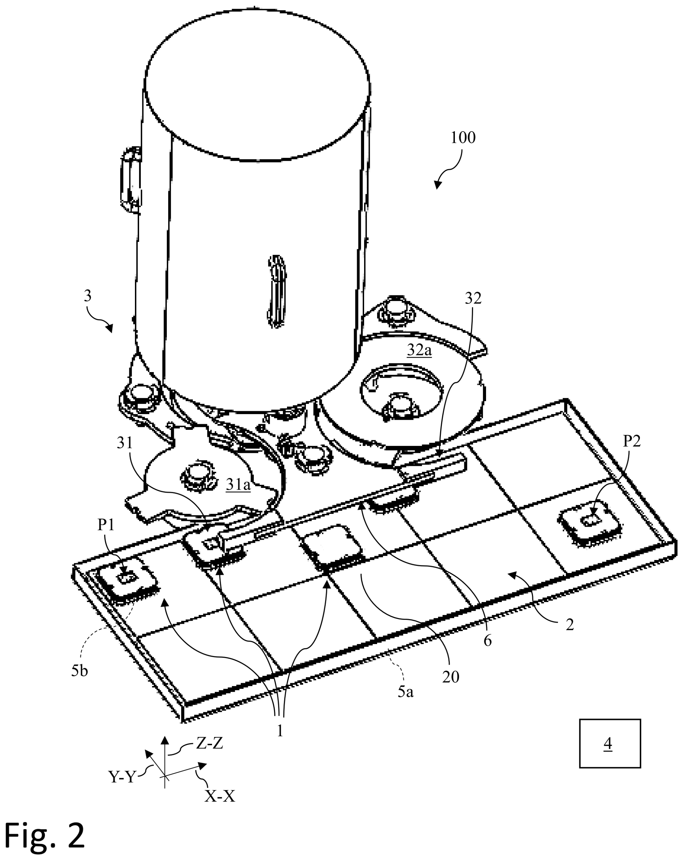

- Figure 2 shows a perspective view of an embodiment of an automation system configured to carry out the method schematized in Figure 1,
- Figure 3 shows a schematic top view of the system of Figure 2 during the execution of step "a1" of the method schematized in Figure 1,
- Figure 4 shows a schematic top view of the system of Figure 2 during the execution of step "a2" of the method schematized in Figure 1,
- Figure 5 shows a schematic top view of the system of Figure 2 during the execution of steps "b1" and "b2" of the method schematized in Figure 1,
- Figure 6 shows a schematic top view of the system of Figure 2 during the execution of step "c" of the method schematized in Figure 1.

### DETAILED DESCRIPTION

The present description relates to a method for managing a fleet of transport units in an automation system (plant) 100 and an automation system (plant) 100 configured to implement said method.

Hereinafter, the automation system 100 will first be described, and then the focus will be on the method for managing the fleet of transport units 1.

In the context of the present description, the term "automation system 100" is intended to indicate a system/plant configured to perform one or more automation operations - such as, for example, assembly, mounting, mechanical processing, quality controls, and many others -, suitable for transforming a workpiece to be processed P1 into a processed workpiece P2 (e.g., a finished product or a semi-finished product).

It is worth specifying that, if the automation station 3 is configured to perform assembly operations, the workpiece to be processed P1 identifies at least one of the components to be assembled, while the processed workpiece P2 identifies the assembled product obtained from the assembly operation.

It is also worth specifying that, if the automation station 3 is configured to perform quality controls (e.g., dimensional checks), the workpiece to be processed P1 identifies the workpiece to be checked, while the processed workpiece P2 identifies the workpiece that has been checked through appropriate quality control procedures (e.g., geometric measurements). Said automation system 100 comprises at least one automation station 3 configured to receive at an entrance a plurality of workpieces to be processed P1 and to return at an exit a plurality of processed workpieces P2, obtained from the processing of respective workpieces to be processed P1.

In detail, the automation station 3 comprises an entrance 31 (entrance/inlet region) and an exit 32 (exit/outlet region), through which to respectively receive the workpieces to be processed P1 from the transport units 1 and deliver the processed workpieces P2 to the transport units 1.

According to one aspect, once the workpieces to be processed P1 have been received at the entrance, the automation station 3 is configured to process them in the order of reception and then to sequentially deliver the processed workpieces P2 thus obtained at the exit.

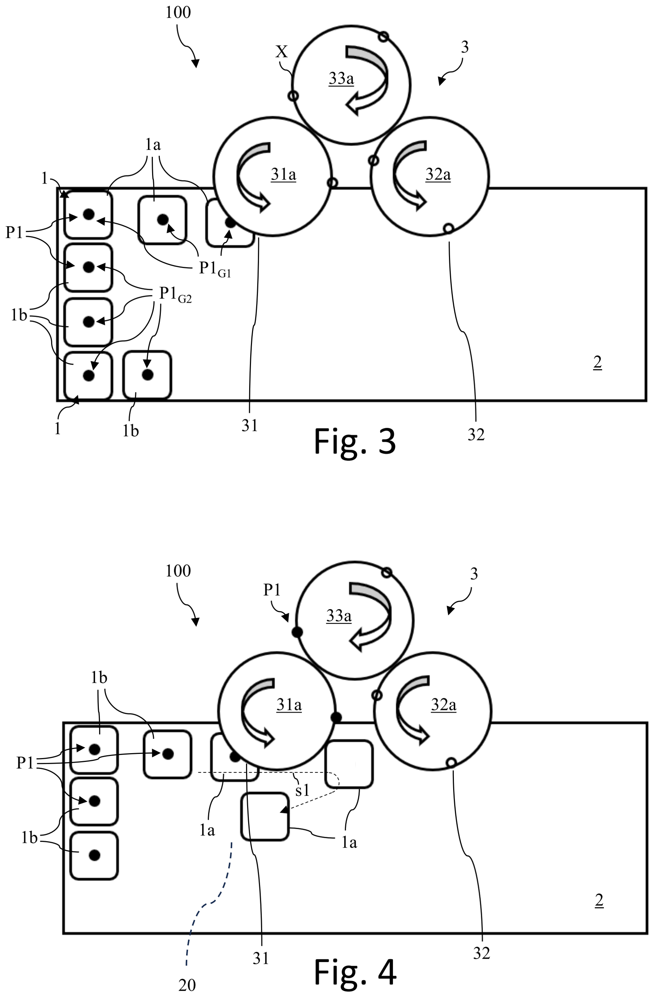

In the embodiment shown in figure 3, the entrance 31 and the exit 32 respectively comprise an entrance rotary table 31a and an exit rotary table 32a. In use, by rotating around respective axes of rotation (not shown in the accompanying figures), the entrance rotary table 31a is configured to sequentially pick up the workpieces to be processed P1 delivered to the entrance 31 by the transport units 1, while the exit rotary table 32a is configured to sequentially unload the processed workpieces P2 onto the transport units 1.

The automation station 3 may also comprise automation members configured to perform one or more automation operations on the workpieces to be processed P1 at the entrance to transform them into the processed workpieces P2 at the exit. Such automation members will not be further described as a person skilled in the art is able to select them independently according to the automation operations to be performed in the automation station 3.

The automation operations (e.g., assembly or quality control) are carried out in a specific operational region 33 of the automation station 3, interposed between the entrance 31 and the exit 32. In use, the workpieces to be processed P1 enter through the entrance 31, move to the operational region 33 where they are transformed into processed workpieces P2, and are then unloaded from the exit 32.

In the embodiment shown in figures 3-6, the workpieces to be processed P1 are transported in succession from the entrance 31 to the operational region 33 by means of the entrance rotary table 31a, while the processed workpieces P2 are transported in succession from the operational region 33 to the exit 32 by means of the exit rotary table 32a.

The operational region 33 may, for example, comprise an intermediate rotary table 33a, operatively associated with the entrance rotary table 31a, to receive from it the workpieces to be processed P1, and with the exit rotary table 32a, to unload to the latter the processed workpieces P2.

According to one aspect, the entrance and exit rotary tables 31a, 32a create with the intermediate rotary table 33a a carousel-type transport system in which the workpieces P1, P2 are transported.

It is worth noting that the carousel-type movement is particularly advantageous for performing precise and rapid assembly operations. In this embodiment, the workpieces to be processed P1 transported by the intermediate rotary table 33a are coupled with respective components (not shown in the figures) transported by a further rotary table (not shown in the figures) to which the intermediate rotary table 33a is operatively associated.

In the automation station 3, the workpieces to be processed and processed P1, P2 travel sequentially along a given path X from the entrance 31 to the exit 32, passing through the operational region 33.

The movement of the workpieces to be processed and processed P1, P2 along said path X can be either continuous or intermittent.

According to a preferred embodiment, the workpieces to be processed and processed P1, P2 travel continuously at a constant speed from the entrance 31 to the exit 32 of the automation station 3. Advantageously, this facilitates the synchronization of the production cycle of the automation station 3 with the movement of the transport units 1 towards the entrance and exit 31, 32 of the latter.

The automation system 100 further comprises a movement plane 2 and a fleet of transport units 1, configured to transport respective workpieces to be processed P1 and processed workpieces P2 from and toward the automation station 3.

The transport units 1 are independently movable on the movement plane 2, preferably along at least a first and a second movement direction X-X, Y-Y, both directed parallel to the movement plane 2 and transversely to each other.

According to one aspect, the movement plane 2 extends predominantly along the first and second movement directions X-X, Y-Y.

The transport units 1 can also be movable orthogonally to the movement plane 2, i.e., along a third movement direction Z-Z orthogonal to the first and second movement directions X-X, Y-Y. The movement of the transport units 1 along the third movement direction Z-Z is particularly advantageous in some applications to facilitate the delivery of the workpieces to be processed P1 to the entrance 31 of the automation station 3 and the collection of the processed workpieces P2 from its exit 32. The transport units 1 can also perform rotations around axes directed parallel to the first, second, or third direction X-X, Y-Y, Z-Z.

In use, the transport units 1 are moved in a controlled manner on the movement plane 2 to sequentially feed respective workpieces to be processed P1 to the entrance 31 of the automation station 3 and to sequentially pick up the processed workpieces P2 from the exit 32 of the automation station 3.

It is worth specifying that the entrance 31 and the exit 32 of the automation station 3 are arranged at or on the movement plane 2, so that the transport units 1 can deliver the workpieces to be processed P1 to the automation station 3 and collect the processed workpieces P2.

The automation system comprises a control unit 4 configured to control the movement of the fleet of transport units 1 in accordance with the method described below.

According to one embodiment, the movement plane 2 comprises first magnetic members, configured to generate a magnetic field with different magnetic properties in different regions of the movement plane 2, and the transport units 1 comprise second magnetic members 5b, operatively associated with the first magnetic members 5a. In this embodiment, the control unit 4 is configured to control the magnetic field generated by the first magnetic members 5a in its different regions to move each transport unit 1 on the movement plane 2 independently.

Preferably, the transport units 1 levitate magnetically on the movement plane 2. The resulting contactless movement is particularly advantageous as it allows reducing the wear and noise of the automation system 100.

Even more preferably, the movement units 1, the movement plane 2, and the control unit 4 realize a "planar drive system", i.e., a transport system that uses planar motors to move the transport units 1 flexibly and precisely on the movement plane 2.

The movement plane 2 has a parking region 20, i.e., a region (even just a virtual region) where one or more transport units 1 can stop/wait without hindering the motion of the remaining transport units 1.

The parking region 20 is distinct from the entrance 31 and the exit 32 of the automation station 3. Therefore, when one or more transport units 1 are waiting in the parking region 20, the entrance 31 and the exit 32 of the automation station 3 remain accessible to the other transport units 1 so that they can perform the delivery and collection operations of the workpieces to be processed/processed P1, P2.

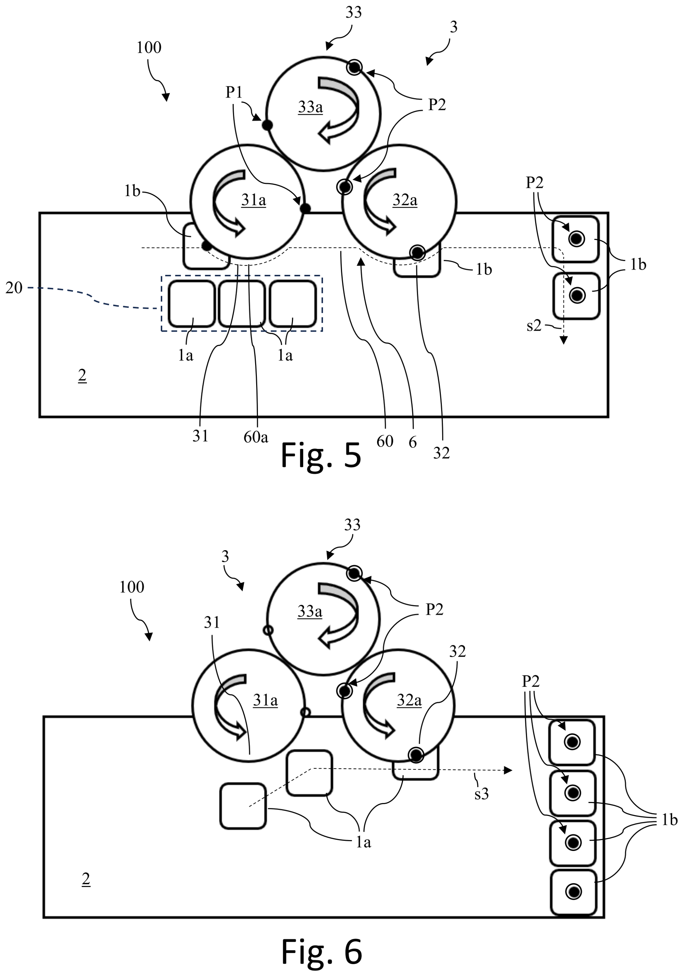

According to an aspect shown in figure 5, the parking region 20 is located outside the trajectory that allows the transport units 1 to move from the entrance 31 to the exit 32 of the automation station 3 by substantially covering the shortest possible distance (i.e., the straight line connecting the entrance 31 and the exit 32). Advantageously, this allows the units that are not in the parking region 20 to move from the entrance 31 to the exit 32 rapidly and with the lowest possible energy consumption.

The automation system 100 may comprise an electronic cam 6 that extends from the entrance 31 to the exit 32 of the automation station 3, configured to guide the transport units 1 from the entrance 31 to the exit 32 along a determined movement trajectory 60.

According to one aspect, the electronic cam 6 is configured to synchronize the movement of the transport units 1 from the entrance 31 to the exit 32 of the automation station 3 with the cycle time of the automation station 3. In other words, the electronic cam 6 is configured to bring the transport units 1 in sequence to the exit 32 of the automation station 3 with the same frequency at which the latter delivers the processed workpieces P2.

It is worth specifying that, if the automation system 100 comprises said electronic cam 6, the parking region 20 is arranged outside the movement trajectory 60.

The movement trajectory 60 identified by the electronic cam 6 is preferably the trajectory that allows the transport units to move from the entrance 31 to the exit 32 of the automation station by substantially covering the shortest possible distance.

According to an aspect shown in figure 5, if the automation station 3 comprises the entrance rotary table 31a and the exit rotary table 32a, the movement trajectory 60 has arc-shaped sections 60a at the entrance 31 and the exit 32. These arc-shaped sections 60a facilitate the transfer operations of the workpieces to be processed/processed P1, P2 between the transport units 1 and the automation station 3.

The parking region 20 is preferably arranged in the proximity of the exit 32 of the automation station 3. This arrangement allows for rapidly bringing the transport units 1 from the parking region 20 to the exit 32 of the automation station 3, to the advantage of the reactivity of picking up the processed workpieces P2. This is particularly advantageous if the transport units 1 waiting in the parking region 20 are used to pick up the processed workpieces P2 in case of delays of the other transport units 1.

The parking region 20 is therefore preferably positioned closer to the exit 32 than to the entrance 31 of the automation station 3.

However, in alternative embodiments, the parking region 20 can also be arranged in the proximity of the entrance 31 of the automation station 3.

The automation system 100 may comprise a plurality of automation stations 3 arranged at different regions of the movement plane 2, each having a respective entrance 31, a respective exit 32, and a respective parking region 20.

If the automation system 100 comprises multiple automation stations 3, the transport units 1 travel in succession between at least part of these, feeding workpieces to be processed P1 and picking up processed workpieces P2.

It is noted that, if the production process involves passing through two or more automation stations 3, the processed workpieces P2 from one automation station 3 become the workpieces to be processed P1 of the subsequent automation station 3.

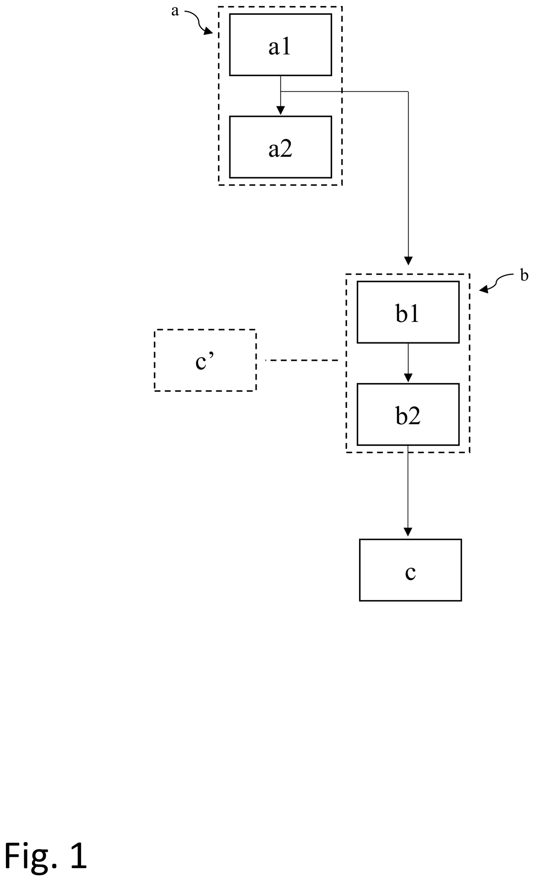

Having described the automation system 100, the focus is now on the method for managing the fleet of transport units 100, schematized in figure 1.

It is well to first specify that this method provides for organizing the fleet of transport units 1 into at least a first group of transport units 1a and a second group of transport units 1b, each of which comprises at least two transport units 1.

In use, the first and second groups of transport units 1a, 1b are configured to sequentially feed to the entrance 31 of the automation station 3 respectively a first group of workpieces to be processed P1_{G1} and a second group of workpieces to be processed P1_{G2}.

The workpieces to be processed P1 are therefore organized into at least two groups: a first group of workpieces to be processed P1_{G1}, fed sequentially to the automation station 3 by the first group of transport units 1a, and a second group of workpieces to be processed P1_{G2}, fed sequentially to the automation station 3 by the second group of transport units 1b, after the first group of workpieces to be processed P1_{G1}.

With reference to figure 3, the transport units 1 of the first and second groups of transport units 1a, 1b are initially all loaded with respective workpieces to be processed P1 of the first or second group of workpieces to be processed P1_{G1}, P1_{G2}.

In this initial phase, the transport units 1 are for example in a loading region (left region in figure 3) of the movement plane 2, where they are loaded with the respective workpieces to be processed P1. If the automation system 100 has a plurality of automation stations 3, in the initial phase the transport units 1 may also come from a preceding automation station 3.

The method object of the present description first provides for bringing the transport units 1 of the first group of transport units 1a loaded with respective workpieces to be processed P1 of the first group of workpieces to be processed P1_{G1} in succession to the entrance 31 of the automation station 3, where they sequentially feed the first group of workpieces to be processed P1_{G1} to the automation station 3 (step a1).

With reference to figure 4, after having delivered the respective workpieces to be processed P1, the transport units 1 of the first group of transport units 1a move in succession to the parking region 20 of the movement plane 2 (step a2), where they stop/wait.

It is worth noting that the transport units of the first group 1a stop/wait in the parking region 20 empty, i.e., in an operative configuration in which they are ready to receive respective processed workpieces P2.

In figure 4, the arrow s1 indicates one of the possible paths that the transport units of the first group 1a can take during steps a1 and a2. In the embodiment of figure 4, the transport units of the first group 1a, after delivering respective workpieces to be processed P1 at the entrance 31 of the automation station 3, are directly brought to the parking region 20 without passing through the exit 32.

According to an alternative embodiment to that shown in figure 4, the transport units of the first group 1a, after leaving the entrance 31 of the automation station 3 and before moving to the parking region 20, pass through the exit 32 of the automation station 3.

Preferably, at the exit 32 of the automation station 3, the presence or absence of processed workpieces P2 on the transport unit 1 is verified by means of appropriate detection members (e.g., optical or weight sensors) placed in signal communication with the control unit 4.

In use, the control unit 4 is configured to determine the movement path of the transport units 1 as a function of the signal received from the detection members. In detail, the control unit 4 is configured to direct the empty transport units 1 towards the parking region 20 and the transport units loaded with the processed workpieces P2 towards what is defined hereinafter as a discharge region of the movement plane 2 or to the subsequent automation station.

The passage of the transport units of the first group 1a through the exit 32 of the automation station 3 where the detection members are present thus allows preventing the erroneous sending of transport units 1 loaded with the processed workpieces P2 to the parking region 20.

Once step a1) is terminated, i.e., after the last transport unit of the first group 1a has delivered its respective workpiece to be processed P1 to the automation station 3, the method provides for moving the second group of transport units 1b (step b).

For the start of step b, it is not necessary to wait for the last transport unit of the first group 1a to have reached the parking region 20, but it is sufficient that it has left the entrance 31 of the automation station 3.

In step b, the method provides for bringing the transport units 1 of the second group of transport units 1b loaded with the respective workpieces to be processed P1 of the second group of workpieces to be processed P1_{G2} in succession to the entrance 31 of the automation station 3, where they sequentially feed the second group of workpieces to be processed P1_{G2} to the automation station 3 (step b1).

This done, i.e., after having delivered the respective workpieces to be processed P1 at the entrance 31 of the automation station 3, the transport units 1 of the second group of transport units 1b move in succession to the exit 32 of the automation station 3 to sequentially pick up respective processed workpieces P2 (step b2).

It is worth noting that at least part of the transport units of the second group 1b collects processed workpieces P2 obtained from the processing of the first group of workpieces to be processed P1_{G1} fed in step a1 by the transport units of the first group 1a which, at this moment, are in the parking region 20.

According to one aspect, in steps b1 and b2, the transport units of the second group 1b are at least partially moved from the entrance 31 to the exit 32 by the electronic cam 6 along the movement trajectory 60.

In the embodiment shown in figure 5, after having picked up the respective processed workpieces P2, the transport units of the second group 1b are brought to a discharge region (right region in figure 5) of the movement plane 2, where they are unloaded of the respective processed workpieces P2. If the automation system 100 comprises a plurality of automation stations 3, the movement units of the second group 1b can then be brought to the subsequent automation station 3.

In figure 5, the arrow s2 indicates one of the possible paths that the transport units of the second group 1b can take during steps b1 and b2.

According to an aspect, after step b2, i.e., after the transport units of the first group 1a have moved to the parking region 20, the method provides for bringing in succession at least part of the first group of transport units 1a from the parking region 20 to the exit 32 of the automation station 3, to sequentially pick up respective processed workpieces P2 obtained from the second group of workpieces to be processed P1_{G2} fed in step b1 (step c).

In figure 6, the arrow s3 indicates one of the possible paths that the transport units of the first group 1a can take during step c.

According to one aspect, step c) is conducted downstream of step b2, i.e., after the last transport unit of the second group 1b has collected its respective processed workpiece P2. That is to say, according to one aspect, step c) is conducted before the interruption of the production process so that, at the subsequent restart, the parking region 20 is empty and the method described above can be started again from the initial phase (step a).

In a preferred embodiment, should one of the transport units of the second group 1b be delayed in picking up its respective processed workpiece P2 in step b2 (and possibly also in delivering its respective workpiece to be processed P1 to the entrance 31 in step b1), the method provides for a step c') in which one of the transport units of the first group 1a that is in the parking region is brought to the exit 32 of the automation station 3 to pick up the processed workpiece P2 that the delayed transport unit 1 should have collected.

Advantageously, step c') allows avoiding shutdowns of the automation system 100 in cases where, for any reason, one or more of the transport units are delayed.

According to one aspect, the delayed transport unit 1 or another transport unit 1, after delivering its respective workpiece to be processed P1 to the entrance 31 of the automation station 3, is sent to the parking region 20 in substitution of the transport unit 1 that performed the pick-up operation of the processed workpiece P2 instead of the delayed transport unit 1. By doing so, the parking region 20 will be populated with a constant number of empty transport units 1, ready to retrieve respective processed workpieces P2.

The presence of a delayed transport unit can be detected, for example, by means of appropriate sensors (not shown in the figures) for tracking the transport units 1. These sensors can be optical or also integrated into the movement plane 2.

If the automation system 100 in which the method described above is implemented comprises a plurality of automation stations 3, the above remains valid, taking into account, however, that in the passage between successive automation stations, the processed workpieces P2 in the preceding station become the workpieces to be processed P1 in the successive station.

Obviously, a person skilled in the art may make numerous equivalent modifications to the variants described above, without thereby departing from the scope of protection defined by the appended claims.

## Claims

1. Method for managing a fleet of transport units (1) of an automation system (100), wherein
- the automation system (100) comprises said fleet of transport units (1), a movement plane (2) and at least one automation station (3), said automation station (3) being configured to sequentially receive a plurality of workpieces to be processed (P1) at an entrance (31) and to sequentially deliver a plurality of processed workpieces (P2) at an exit (32), the automation station (3) being configured to perform one or more automation operations on the workpieces to be processed (P1) to transform said workpieces to be processed (P1) into the processed workpieces (P2), the workpieces to be processed (P1) being organized in a first group of workpieces to be processed (P1_{G1}) and in a second group of workpieces to be processed (P1_{G2})
- the transport units (1) are independently movable in the movement plane (2) in a controlled manner to sequentially feed respective workpieces to be processed (P1) to the entrance (31) of the automation station (3) and sequentially collect respective processed workpieces (P2) from the exit (32) of the automation station (3), the transport units (1) being organized in a first group of transport units (1a) and in a second group of transport units (1b),
said method comprising the steps of:
a) bringing the first group of transport units (1a), loaded with respective workpieces to be processed (P1) of the first group of workpieces to be processed (P1_{G1}), in succession:
a1) to the entrance (31) of the automation station (3) to feed the first group of workpieces to be processed (P1_{G1}) to the automation station (3), and then
a2) to a parking region (20) of the movement plane (2)
b) after step a1), bringing the second group of transport units (1b), loaded with respective workpieces to be processed (P1) of the second group of workpieces to be processed (P1_{G2}), in succession:
b1) to the entrance (31) of the automation station (3) to feed the second group of workpieces to be processed (P1_{G2}) to said automation station (3), and then
b2) to the exit (32) of the automation station (3) to sequentially collect respective processed workpieces (P2) obtained from the first group of workpieces to be processed (P1_{G1}) fed in step a1),
c) after step a2), bringing in succession the first group of transport units (1a) from the parking region (20) to the exit (32) to sequentially collect respective processed workpieces (P2) obtained from the second group of workpieces to be processed (P1_{G2}) fed in step b1).

2. Method according to claim 1, wherein, if one of the transport units (1) of the second group of transport units (1b) is late in collecting the respective processed workpiece (P2) in step b2), the method involves the step c') of bringing one of the transport units (1) of the first group of transport units (1a) from the parking region (20) to the exit (32) to collect the processed workpiece (P2) that the late transport unit (1) should have collected.

3. Method according to claim 1 or 2, wherein the entrance (31) and the exit (32) of the automation station (3) are arranged on the movement plane (2), the parking region (20) being distinct from the entrance (31) and the exit (32) of the automation station (3), the parking region (20) being arranged close to the exit (32).

4. Method according to any one of the preceding claims, wherein the parking region (20) is located outside the trajectory which allows the transport units (1) to move from the entrance (31) to the exit (32) of the automation station (3) covering substantially the shortest distance possible.

5. Method according to any one of the preceding claims, wherein the automation station (3) is configured to transport the workpieces to be processed (P1) from the entrance (31) to an operational region (33) and the processed workpieces (P2) from the operational region (33) to the exit (32) in succession along a given path (X) in a continuous or intermittent manner.

6. Automation system (100) comprising:
- at least one automation station (3) configured to sequentially receive a plurality of workpieces to be processed (P1) at an entrance (31), and to sequentially deliver a plurality of processed workpieces (P2) at an exit (32), the automation station (3) being configured to perform one or more automation operations on the workpieces to be processed (P1) to transform said workpieces to be processed (P1) into the processed workpieces (P2),
- a movement plane (2) having a parking region (20) where transport units (1) can stop after having delivered the workpieces to be processed (P1) at the entrance of the automation station (3),
- a fleet of transport units (1) independently movable on the movement plane (2) in a controlled manner to sequentially feed respective workpieces to be processed (P1) to the entrance (31) of the automation station (3), and collect respective processed workpieces (P2) from the exit (32) of the automation station (3),
- a control unit (4) configured to control the movement of each transport unit (1) on the movement plane (2),
wherein the control unit (4) is configured to control the movement of the fleet of transport units (1) in accordance to the method according to any one of the preceding claims.

7. Automation system (100) according to claim 6, wherein:
- the movement plane (2) comprises first magnetic members (5a) configured to generate a magnetic field having different magnetic properties in different regions of the movement plane (2),
- the transport units (1) comprise second magnetic members (5b) functionally associated with the first magnetic members (5a),
- the control unit (4) is configured to control the magnetic field generated by the first magnetic members (5a) to independently control the movement of each transport unit (1).

8. Automation system (100) according to claim 6 or 7, comprising an electronic cam (6) extending from the entrance (31) to the exit (32) of the automation station (3), said electronic cam (6) being configured to guide the transport units (1) from the entrance (31) to the exit (32).

9. Automation system (100) according to any one of claims 6 to 8, wherein the parking region (20) is arranged close to the exit (32) of the automation station (3).

10. Automation system (100) according to any one of claims 6 to 9, wherein the automation station (3) comprises:
- an operational region (33) where said one or more automation operations are performed on the workpieces to be processed (P1) to transform them into processed workpieces (P2),
- an entrance rotary table (31a) configured to collect in succession the workpieces to be processed (P1) delivered at the entrance (31) by the transport units (1) and transport them towards the operational region (33)
- an exit rotary table (32a) configured to collect in succession the processed workpieces (P2) from the operational region (33) and transport them towards the exit (32) where they are collected by the transport units (1).
